# EUROPÄISCHE PATENTSCHRIFT

(11) **EP 0 576 460 B1**
(45) Veröffentlichungstag und Bekanntmachung des Hinweises auf die Patenterteilung: **01.05.1996**
(21) Anmeldenummer: 92905940.0
(22) Anmeldetag: 26.02.1992
(51) Int. Cl.: G02B 6/36, G02B 6/38, G02B 26/02

(54) **VORRICHTUNG ZUR KOPPLUNG VON LICHTWELLENLEITERN**
DEVICE FOR COUPLING OPTICAL WAVEGUIDES
DISPOSITIF POUR LE COUPLAGE DE GUIDES D'ONDES

(30) Priorität: 18.03.1991 DE 4109196
(43) Veröffentlichungstag der Anmeldung: 05.01.1994
(73) Patentinhaber: SIEMENS AKTIENGESELLSCHAFT, D-80333 München (DE)
(72) Erfinder: BRUCH, Helmut, D-1000 Berlin 20 (DE); KNEIER, Michael, D-1000 Berlin 21 (DE); STECKENBORN, Arno, D-1000 Berlin 20 (DE)
(86) Internationale Anmeldenummer: DE9200163
(87) Internationale Veröffentlichungsnummer: WO9216861

(56) Entgegenhaltungen:
- EP-A- 0 298 260
- WO-A-85/01803
- WO-A-89/01641
- WO-A-91/11744
- TRANSACTIONS OF THE INSTITUTE OF ELECTRONICS AND COMMUNICATIONS, Band E70, Nr. 8, August 1987, (Tokyo, JP); S. Nagasawa: "A new type of optical switch with a plastic molded ferrule", Seiten 696-690
- PROCEEDINGS OF THE IEEE, Band 70, Nr. 5, Mai 1982, (New York, US) K. Petersen: "Silicon as a mechanical material", Seiten 420-457

## Beschreibung

Die Erfindung bezieht sich auf eine Vorrichtung zur stirnseitigen Kopplung zweier einzelner oder gruppenweise zusammengefaßter Lichtwellenleiter mit einer ersten und einer zweiten Siliziumplatte, die an ihren Oberseiten Zentriernuten für die Lichtwellenleiter aufweisen und die mittels Vorsprüngen und/oder Ausnehmungen zueinander ausrichtbar sind.

Eine solche Koppelvorrichtung ist beispielsweise aus der DE-OS-37 28 053 bekannt. Bei der dort beschriebenen Koppelvorrichtung sind die beiden Siliziumplatten an ihren Seiten mit parallel zu den Zentriernuten verlaufenden Führungsnuten versehen, in die gemeinsame, die Spleißebene übergreifende Führungsteile zur Ausrichtung der beiden Siliziumplatten gegeneinander einlegbar sind. Dadurch sind die Siliziumplatten fluchtend zueinander ausrichtbar. Die spezielle Ausgestaltung dieser Koppelvorrichtung erlaubt es, die beiden Spleißhälften in zwei unterschiedlichen Positionen zusemmenzustecken. Der Wechsel von einer Steckposition in die andere ist dabei sehr aufwendig.

Der Erfindung liegt daher die Aufgabe zugrunde, eine Koppelvorrichtung der eingangs genannten Art so zu gestalten, daß die Lichtwellenleiter mit einfachen Mitteln von einer ersten fluchtenden Koppelposition in eine zweite gegebenenfalls ebenfalls fluchtende Koppelposition überführbar sind.

Die Aufgabe wird erfindungsgemäß dadurch gelöst, daß Begrenzungsflächen der Vorsprünge und/oder Ausnehmungen der zweiten Siliziumplatte Anschlagflächen für wenigstens ein mit der ersten Siliziumplatte fest verbundenes Teil zur Begrenzung einer zu den Längsachsen der Lichtwellenleiter transversalen Schaltbewegung einer der Siliziumplatten bilden.

Die Vorsprünge und Ausnehmungen sind an den Siliziumplatten so positioniert, daß die Lage der Begrenzungsflächen eine fluchtende Ausrichtung der zu koppelnden Lichtwellenleiterpaare garantiert. Es können beispielsweise in Ausnehmungen der ersten Siliziumplatte eines oder mehrere Teile befestigt sein, die gegenüber der ersten Siliziumplatte ortsfest fixiert sind und die in eine Ausnehmung der zweiten Siliziumplatte hineinragen. Die Ausnehmung der zweiten Siliziumplatte kann so ausgelegt sein, daß die zweite Siliziumplatte gegenüber den Teilen einen genau definierten Bewequngsspielraum zwischen zwei definierten Endpositionen aufweist. Die Endpositionen, in denen die Teile an Anschlagflächen der zweiten Siliziumplatte anstoßen, definieren Schaltstellungen der Koppelvorrichtung, in denen jeweils verschiedene Paare von Lichtwellenleitern miteinander fluchten.

Eine vorteilhafte Ausqestaltung der Erfindung sieht vor, daß die Vorsprünge und/oder Ausnehmungen durch Ätzen der Siliziumplatten geschaffen sind. Siliziumplatten lassen sich durch Ätzen mit Hilfe von lithographisch hergestellten Ätzmasken hochpräzise bearbeiten. Dadurch lassen sich die Ausnehmungen und/oder Vorsprünge so genau herstellen, daß ihre Begrenzungsflächen die Schaltpositionen der Koppelvorrichtung genügend genau definieren. Außerdem gewährleistet das Ätzverfahren für eine Serienproduktion eine hohe Wirtschaftlichkeit.

Weiterhin kann die Erfindung dadurch ausgestaltet werden, daß die Anschlagflächen durch Begrenzungsflächen einer durchgehenden Ausnehmung der zweiten Siliziumplatte gebildet sind und daß an jeder der Begrenzungsflächen wenigstens zwei Anschlagflächen unterschiedlicher Neigung vorgesehen sind, von denen eine erste Anschlagfläche einen Winkel, der kleiner ist als 90°, mit der Oberseite der zweiten Siliziumplatte einschließt und eine zweite Anschlagfläche mit einer der Oberseite gegenüberliegenden Unterseite der zweiten Siliziumplatte ebenfalls einen Winkel, der kleiner ist als 90°, einschließt, und daß jeder der Anschlagflächen (23, 24, 25) der zweiten Siliziumplatte eine Fläche der ersten Siliziumplatte zugeordnet ist, die die gleiche Neigung aufweist, wie die jeweilige Anschlagfläche.

Die Position der Ausnehmung in der zweiten Siliziumplatte relativ zur Lage der Zentriernuten in der zweiten Siliziumplatte ist auf die Lage der Zentriernuten in der ersten Siliziumplatte und die Abmessungen desjenigen Teils der ersten Siliziumplatte, das in die Ausnehmung der zweiten Siliziumplatte hineinragt, so abgestimmt, daß die Anschlagflächen jeweils eine Schaltposition definieren, in der bestimmte Lichtwellenleiterpaare miteinander fluchten. Die Formgebung der ersten und der zweiten Siliziumplatte kann durch Ätzen der Ausnehmung und der Zentriernuten so genau eingehalten werden, daß keine nachträgliche Justierung des Schalters notwendig ist. In jeder der beiden definierten Schaltpositionen liegt ein Teil der ersten Siliziumplatte an einer Anschlagfläche der zweiten Siliziumplatte an. Die Genauigkeit der Schaltpositionen ist nur durch die Genauigkeit der Ätztechnik von Siliziumwafern begrenzt.

Zur Herstellung von Siliziumplatten, auf denen Nuten zur Zentrierung von Lichtwellenleitern eingeätzt werden sollen, werden üblicherweise Siliziumwafer der Orientierung (100) verwendet (die Zahlen bedeuten die Miller'schen Indizes der Lage der Oberfläche innerhalb der Kristallstruktur). In solchen (100)-Siliziumwafern entstehen beim Ätzvorgang üblicherweise Begrenzungsflächen, die gegenüber der Oberfläche des Wafers um einen Winkel von 54,74° geneigt sind. Solche geneigten Begrenzungsflächen erschweren die Herstellung von mechanischen Anschlägen zur Begrenzung der seitlichen Bewegung einer Siliziumplatte. Außerdem können beim Anliegen einer Siliziumplatte an einer geneigten Anschlagfläche Querkräfte auftreten, die ein Ausweichen der beweglichen Siliziumplatte aus der gewünschten Schaltposition bewirken. Diesem Problem wird bei der Ausgestaltung der Erfindung dadurch begegnet, daß an jedem der Anschläge wenigstens zwei Anschlagflächen unterschiedlicher Neigung vorgesehen sind. An jeder der Anschlagflächen liegt in der entsprechenden Schaltposition eine Fläche der beweglichen Siliziumplatte an, so daß die entstehenden Querkräfte entgegengesetzte Richtungen aufweisen und einander aufheben.

Eine weitere Ausgestaltung der Erfindung sieht vor, daß jeweils zwischen zwei Anschlagflächen gleicher Neigung eine Anschlagfläche anderer Neigung angeordnet ist.

Durch diese symmetrische Anordnung von drei Anschlagflächen wird eine Verdrehung der beweglichen Siliziumplatte durch die an den geneigten Anschlagflächen auftretenden Querkräfte verhindert. Dadurch wird eine stabile und reproduzierbare Positionierung der beweglichen Siliziumplatte garantiert.

Die Erfindung wird außerdem vorteilhaft dadurch ausgestaltet, daß die erste und die zweite Siliziumplatte über eine Parallelführung miteinander verbunden sind.

Eine Parallelführung erlaubt ausschließlich eine translatorische Schaltbewegung, die genau senkrecht zur Längsachse der Lichtwellenleiter verläuft und eine gleichbleibende Entfernung zwischen den Stirnflächen der zu koppelnden Lichtwellenleiter garantiert. Es sind insbesondere keine Winkelabweichungen zwischen den Längsachsen der jeweils zu koppelnden Lichtwellenleiter zu befürchten.

Gemäß einer vorteilhaften Ausgestaltung der Erfindung besteht die Parallelführung aus einer Blechfeder. Eine solche Blechfeder kann beispielsweise, wie beim Gegenstand der EP-A1-0 298 260 aus einer M-Feder bestehen, die eine besonders genaue Führung der beweglichen Siliziumplatte gewährleistet. Die Blechfeder kann so vorgespannt sein, daß die bewegliche Siliziumplatte durch die Wirkung der Feder in eine definierte Schaltposition gebracht wird.

Die Parallelführung kann aber auch dadurch verwirklicht sein, daß die erste und die zweite Siliziumplatte in jeweils einer Aufnahme fixiert sind und daß die Aufnahmen über zwei zueinander parallel verlaufende Filmgelenke miteinander verbunden sind. Die beiden Aufnahmen können zusammen mit den Filmgelenken einstückig ausgebildet und beispielsweise durch ein Kunststoffspritzgußteil verwirklicht sein. Da die Positionierung der Siliziumplatten zueinander in den Schaltpositionen nur durch die Geometrie der Siliziumplatten selbst bestimmt ist, ist der Schalter gegenüber Fertigungstoleranzen der Parallelführung, insbesondere des Spritzgußteils, nicht empfindlich.

Die Erfindung bezieht sich weiterhin auf ein Verfahren zur Herstellung einer erfindungsgemäßen Vorrichtung, bei dem die beiden Siliziumplatten aus Teilen einer einzigen Ausgangsplatte hergestellt werden, und bei dem die Nuten und Anschlagflächen in die Ausgangsplatte durch Ätzen mit Hilfe einer Maske eingebracht werden.

Mit dem chemischen Ätzen steht eine Bearbeitungsmöglichkeit für Siliziumwafer zur Verfügung, mit der die erforderlichen mechanischen Abmessungen auf Bruchteile eines Mikrometers genau eingehalten werden können. Es ist dazu ausreichend, die Masken für die Bearbeitung der Siliziumwafer mit der entsprechenden Genauigkeit herzustellen. Zum Ätzen von Anschlagflächen unterschiedlicher Neigung ist es unter Umständen erforderlich, den Wafer von der Oberseite und der Unterseite her zu ätzen.

Das erfindungsgemäße Verfahren kann vorteilhaft dadurch ausgestaltet werden, daß die beiden Siliziumplatten nach dem Einbringen der Nuten und Anschlagflächen voneinander getrennt werden. Die beiden Siliziumplatten können dadurch aus der einzigen Ausgangsplatte in einem einzigen Ätzvorgang hergestellt werden. Wenn für die Herstellung und das Ätzen der Ausgangsplatte eine einzige, zusammenhängende Maske verwendet wird, ist die relative Positionierung aller Anschlagflächen und der Zentriernuten zueinander bei beiden Siliziumplatten nach dem Trennen besonders genau. Die Zentriernuten für die Lichtwellenleiter können beispielsweise in der Ausgangsplatte als beide Siliziumplatten übergreifende, durchgehende Nuten vorgesehen sein.

Im folgenden wird die Erfindung anhand von Ausführungsbeispielen in einer Zeichnung gezeigt und anschließend beschrieben.

Dabei zeigt
- Figur 1: einen erfindungsgemäßen Schalter schematisch und im vergrößerten Maßstab in einer Aufsicht,
- Figur 2: den Schalter aus Figur 1 in einer Seitenansicht,
- Figur 3: den Bereich der Ausnehmung in der zweiten Siliziumplatte mit dem hineinragenden Teil der ersten Siliziumplatte in einer Ausschnittvergrößerung,
- Figuren 4 und 5: schematische Darstellungen von Anschlagflächen,
- Figuren 6, 7 und 8: Schnitte entlang den in der Figur 3 bezeichneten Linien, wobei alles nicht zum Verständnis der Erfindung notwendige weggelassen ist.
- Figur 9: eine dreidimensionale Ansicht des in der Figur 3 strichpunktiert umrandeten Bereiches der Anschlagflächen,
- Figur 10: Aufnahmen für die beiden Siliziumplatten,
- Figur 11: eine weitere Gestaltungsform der erfindungsgemäßen Koppeleinrichtung in einer Seitenansicht.
- Figur 12: die Vorrichtung aus Figur 11 in einer Aufsicht ohne Andruckfeder,
- Figur 13: die Vorrichtung aus Figur 11 in Querschnitten.

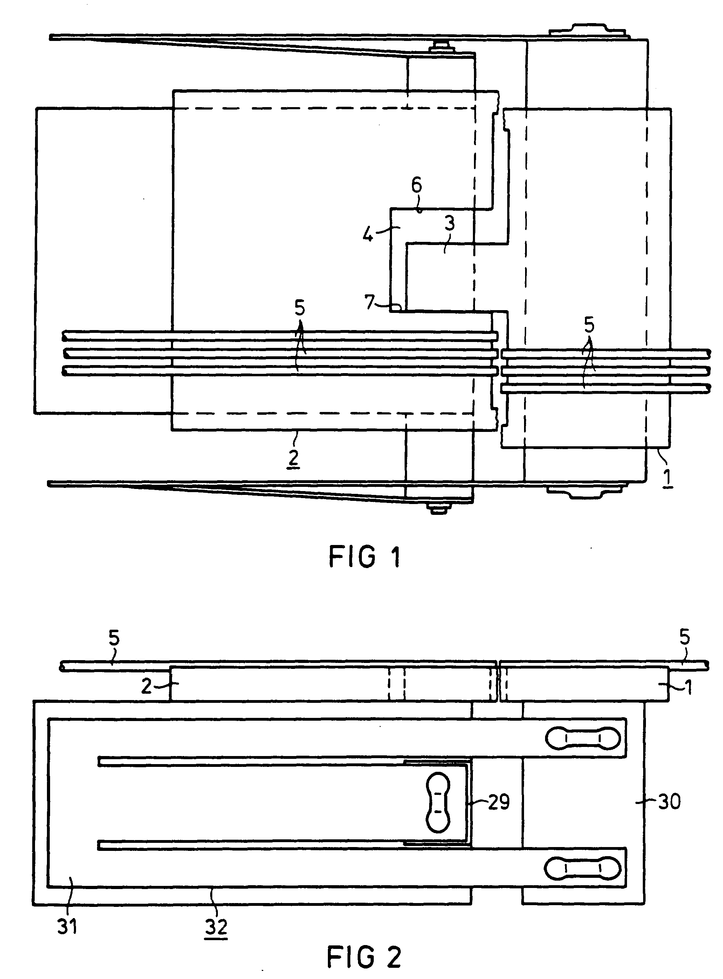

In den Figuren 1 und 2 ist eine erfindungsgemäße Vorrichtung mit einer ersten Siliziumplatte 1 und einer zweiten Siliziumplatte 2 dargestellt. Ein Teil 3 der ersten Siliziumplatte 1 ragt in eine Ausnehmung 4 in der zweiten Siliziumplatte 2 hinein. An den Oberseiten der beiden Siliziumplatten sind Nuten angeordnet, die in das Siliziummaterial eingeätzt sind und je einen Lichtwellenleiter 5 zentrieren. Die beiden Siliziumplatten 1, 2 sind in der Plattenebene senkrecht zur Längsachse der Lichtwellenleiter 5 gegeneinander beweglich, soweit dies die Abmessungen der Ausnehmung 4 und des in diese hineinragenden Teiles 3 erlauben.

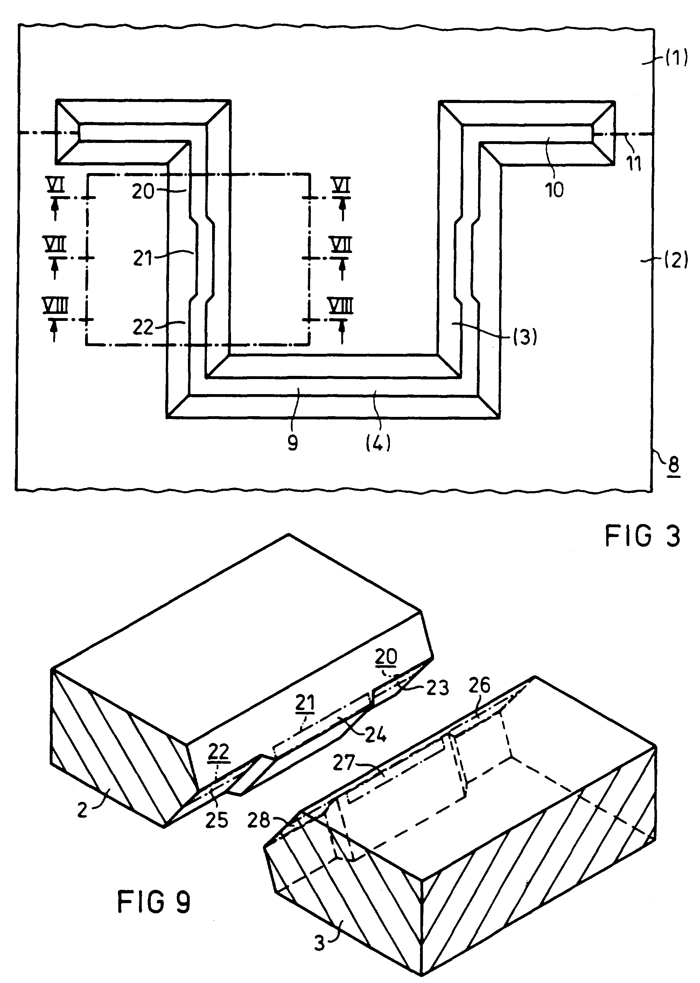

Die Begrenzungsflächen 6, 7 der Ausnehmung 4 in der Siliziumplatte 2 bilden Anschlagflächen (23, 24, 25) zur exakten Begrenzung der Schaltbewegung. Diese Anschlagflächen (23, 24, 25) sind in der Figur 3 nur schematisch als Anschlagbereiche (20, 21, 22) dargestellt.

Die beiden Siliziumplatten 1, 2 sind miteinander durch eine Parallelführung in Form einer M-Feder verbunden. Das eine Ende 31 der M-Feder 32 ist frei. Die Konstruktion der M-Feder 32 bewirkt, daß die Stirnflächen der jeweils miteinander zu koppelnden Lichtwellenleiter in unterschiedlichen Schaltpositionen jeweils dieselbe Entfernung voneinander haben. Die M-Feder 32 kann beispielsweise zu einer Seite vorgespannt sein, so daß sich im Ruhezustand ein definierter Schaltzustand der Koppelvorrichtung ergibt. Der Zusammenbau der Vorrichtung kann beispielsweise so erfolgen, daß zunächst die beiden Siliziumplatten 1, 2 noch in Form einer Ausgangsplatte 8 (Fig. 3) zusammenhängen. Die Ausgangsplatte 8 wird dann auf zwei Blöcken 29 und 30 der Koppelvorrichtung derart befestigt, daß nach dem Trennen der beiden Siliziumplatten voneinander jede der Platten 1, 2 an einem der Blöcke 29, 30 befestigt ist. Die Fixierung der Ausgangsplatte 8 auf den Blöcken 29, 30 geschieht in einer definierten Schaltposition der Vorrichtung, so daß in dieser Schaltposition die V-Nuten der beiden Siliziumplatten 1, 2 später automatisch fluchten. Die Breite der Ausnehmung 4 in der zweiten Siliziumplatte 2 und des Teils 3 der ersten Siliziumplatte 1 sind so gewählt, daß sich ein Schaltweg ergibt, der die Koppelvorrichtung von einen ersten Zustand, in dem ein Teil der V-Nuten miteinander fluchtet, in einen zweiten Schaltzustand überführt, in dem ebenfalls ein Teil der V-Nuten miteinander fluchtet.

Um die Ausnehmung 4 und das Teil 3 der Siliziumplatte 1 mit genügender Genauigkeit herzustellen, bedient man sich vorteilhafterweise eines Ätzverfahrens. Es wird in die Ausgangsplatte 8 ein im wesentlichen U-förmiger Schlitz 9 eingeätzt, der das Teil 3 von der Ausnehmung 4 trennt. Der Schlitz 9 kann Verlängerungen 10 aufweisen, die das Trennen der ersten Siliziumplatte 1 von der zweiten Siliziumplatte 2 erleichtern.

Außerdem kann das Trennen der beiden Siliziumplatten 1, 2 voneinander durch Sollbruchstellen 11 in Form von schmalen Stegen erleichtert sein. Diese Sollbruchstellen können beispielsweise aus Anätzungen der Ausgangsplatte 8 bestehen.

Da die Ausgangsplatte 8 bzw. die Siliziumplatte 1 und die zweite Siliziumplatte 2 mit V-Nuten an ihren Oberseiten versehen sein soll, ist es notwendig, für die Siliziumplatten 1, 2, 8 (100)-Siliziumwafer zu verwenden. In diese lassen sich leicht Nuten einätzen, deren Flanken in einem Winkel von 54,74° gegenüber der Oberfläche des Wafers geneigt sind. Bei einem solchen (100)-Wafer läßt sich der Schlitz 9 nicht mit senkrecht zur Wafer-Oberfläche verlaufenden Konturen ätzen. Es ergeben sich vielmehr Konturen, wie sie in den Figuren 4 und 5 gezeigt sind. Bei der Verwendung solcher schräg verlaufender Konturen als Anschlagflächen ergeben sich Probleme. Wird beispielsweise die in Figur 4 rechts dargestellte Platte 12 in Richtung des Pfeiles 14 gegen die links dargestellte Platte 13 bewegt, so ergibt sich beim Zusammenstoßen der beiden Teile eine Querkraft auf die Platte 12, die durch den Pfeil 15 dargestellt und nach oben gerichtet ist. Den Fall einer anderen Neigung der Begrenzungsflächen der Platten zeigt die Figur 5. Dort entsteht bei einer Bewegung der rechten Platte 16 gegen die linke Platte 17 in Richtung des Pfeiles 18 eine Querkraft in Richtung des Pfeiles 19.

Bei dem erfindungsgemäßen Schalter sind zur Lösung dieses Problems in den Begrenzungsflächen 6, 7 der Ausnehmung 4 in der Siliziumplatte 2 Anschlagbereiche 20, 21, 22 mit unterschiedlich geneigten Anschlagflächen 23, 24, 25 vorgesehen (Fig. 6 bis 9). Diese Anschlagflächen 23, 24, 25 wirken jeweils mit Flächen 26, 27, 28 der ersten Siliziumplatte 1 zusammen. Die dabei auftretenden Querkräfte heben einander wegen ihres entgegengesetzten Richtungssinnes auf. Dadurch findet keine Ausweichbewegung des Teiles 3 der Siliziumplatte 1 nach der Berührung der Anschlagflächen 23, 24, 25 auf. Es ist daher kein Ausweichen der in den V-Nuten geführten Lichtwellenleiter aus der angestrebten Schaltposition zu befürchten. Um die Anschlagflächen 23, 24, 25 bzw. die mit ihnen zusammenwirkenden Flächen 26, 27, 28 der ersten Siliziumplatte 1 möglichst klein zu halten, ist dort, wo die jeweilige Fläche bzw. die Anschlagfläche in einem spitzen Winkel auf eine Oberfläche der entsprechenden Siliziumplatte 1, 2 trifft, ein keilförmiges Stück der Siliziumplatte 1, 2 weggeätzt. Dadurch werden die wirksamen Anschlagflächen verkleinert, wodurch verhindert werden soll, daß sich auf einer der Flächen Schmutz absetzt, der das Erreichen der gewünschten Schaltposition verhindern könnte.

In der Figur 9 ist der in dem strichpunktierten Bereich der Figur 3 dargestellte Teil des Schlitzes 9 mit den ihn umgebenden Teilen der ersten Siliziumplatte 1 und der zweiten Siliziumplatte 2 in einer dreidimensionalen Darstellung gezeigt. Die Flächen 26, 27, 28 und die Anschlagflächen 23, 24, 25 sind zur Verdeutlichung stark umrandet. Die Anpassung der Neigung einer Fläche 26 an die Anschlagfläche 23 der zweiten Siliziumplatte 2 ergibt sich automatisch dadurch, daß die Kristallebenen der ersten Siliziumplatte 1 ebenso orientiert sind wie in der zweiten Siliziumplatte 2, so daß sich beim Ätzen der beiden Platten bzw. beim Ätzen der Ausgangsplatte 8 überall die gleiche Neigung der entstehenden Flächen ergibt.

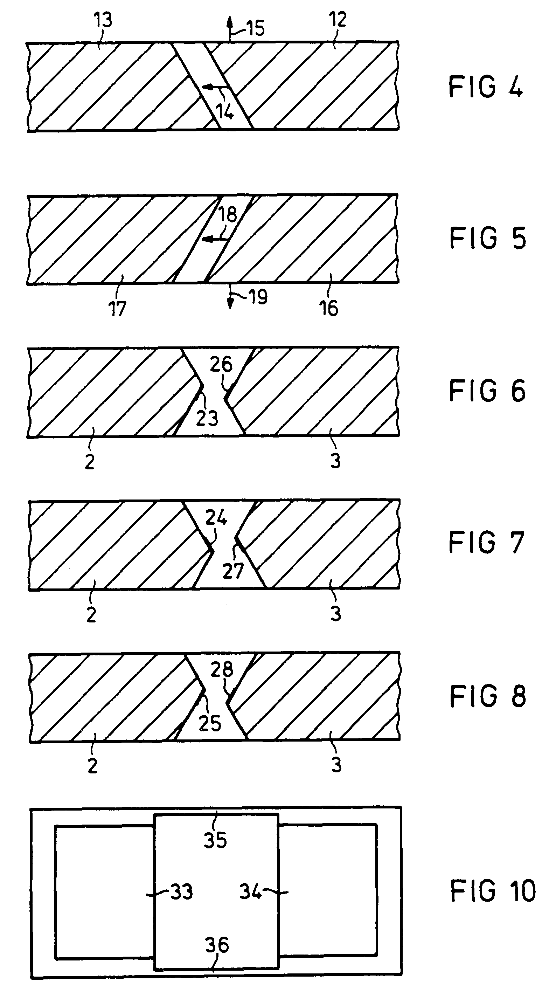

In Figur 10 sind zwei Aufnahmen 33, 34 dargestellt, die je eine der Siliziumplatten 1, 2 in einer Vertiefung aufnehmen und die über Filmgelenke 35, 36 miteinander verbunden sind. Die Filmgelenke 35, 36 bilden auch die Parallelführung für die Koppelvorrichtung.

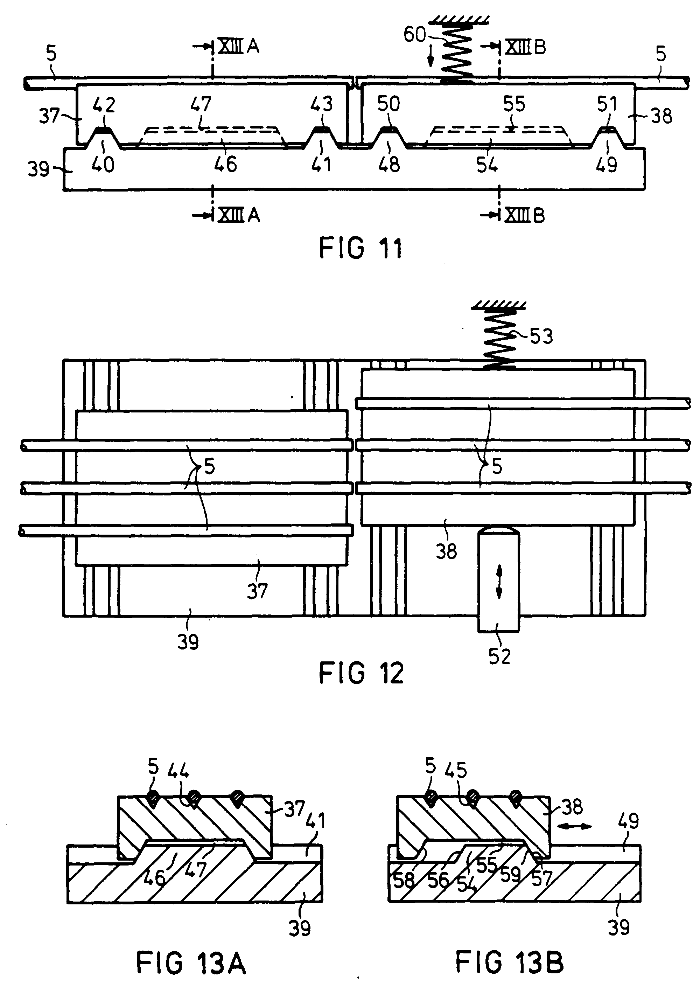

Die weitere, in den Figuren 11 bis 13 gezeigte Gestaltungsform der erfindungsgemäßen Vorrichtung bildet einen optischen Schalter, der zwei Siliziumplatten 37, 38 sowie eine Grundplatte 39 enthält. Die erste Siliziumplatte 37 ist auf zwei Vorsprünge 40, 41 der Grundplatte 39 aufgesetzt und dort mittels eines Klebers fixiert. Die erste Siliziumplatte 37 weist Ausnehmungen 42, 43 auf, die mit den Vorsprüngen 40, 41 zur genauen Positionierung der Platte zusammenwirken. Die Siliziumplatten 37, 38 weisen auf ihren Oberseiten Zentriernuten 44, 45 zur Führung von Lichtwellenleitern 5 auf. In der Grundplatte 39 ist zwischen den Vorsprüngen 40, 41 ein weiterer Vorsprung 46 vorgesehen, der mit einer weiteren Ausnehmung 47 in der Siliziumplatte 37 zusammenwirkt und die Siliziumplatte 37 in bezug auf die Richtung senkrecht zur Längsachse der Zentriernuten 44 festgelegt. Auf diese Weise ist die Siliziumplatte 37 mittels der Vorsprünge 40, 41, 46 und der Ausnehmungen 42, 43, 47 in bezug auf die Grundplatte 39 eindeutig festgelegt.

Die Ausnehmungen und Vorsprünge werden in die Siliziumplatte 37 und die Grundplatte 39 vorzugsweise mit chemischer Ätztechnik eingebracht. Dadurch wird eine hohe Genauigkeit erreicht, die eine hochpräzise Positionierung der Siliziumplatte gegenüber der Grundplatte 39 gewährleistet.

Die Grundplatte 39 weist zwei Führungsschienen 48, 49 auf, die jeweils durch Vorsprünge der Grundplatte 39 gebildet sind. Die Schienen 48, 49 greifen in Ausnehmungen 50, 51 der zweiten Siliziumplatte 38 ein. Die zweite Siliziumplatte 38 ist auf den Schienen 48, 49 transversal zur Längsrichtung der Lichtwellenleiter verschiebbar. Dabei ist die Richtung senkrecht zur Längsachse der Lichtwellenleiter sehr präzise eingehalten, so daß der Abstand zwischen den Stirnflächen der zu koppelnden Lichtwellenleiter durch eine transversale Verschiebung der zweiten Siliziumplatte 38 nicht geändert wird. Die Platte 38 wird über einen Stößel 52 angetrieben. Bei Zurückziehen des Stößels 52 bewirkt eine Rückstellfeder 53, daß die Platte 38 in ihre Ausgangsstellung zurückbewegt wird.

Figur 13 zeigt zwei verschiedene Querschnitte durch den Schalter, deren Lage in der Figur 11 eingezeichnet ist. In Figur 13A ist dargestellt, daß der weitere Vorsprung 46 der Grundplatte 39 die Position der Siliziumplatte 37 in transversaler Richtung festlegt. In Figur 13B ist dargestellt, daß der weitere Vorsprung 54 der Grundplatte 39 mit der weiteren Ausnehmung 55 der Siliziumplatte 38 zusammenwirkt. Der weitere Vorsprung 54 ist in der zur Längsachse der Lichtwellenleiter 5 transversalen Richtung schmaler als die weitere Ausnehmung 55. Dadurch ist die Siliziumplatte 38 auf den Schienen 48, 49 transversal um eine festgelegte Strecke verschiebbar. Der weitere Vorsprung 54 bildet zwei Flächen 56, 57, mit denen die Anschlagflächen 58, 59 der Siliziumplatte 38 in den verschiedenen Schaltstellungen zusammenwirken. Beim Anschlag einer Fläche 58, 59 an einer der Flächen 56, 57 ist die Siliziumplatte 38 in transversaler Richtung genau so positioniert, daß die Lichtwellenleiter der ersten Platte 37 mit bestimmten Lichtwellenleitern der zweiten Platte 38 genau fluchten. Die Vorsprünge 40, 41 bzw. weiteren Vorsprünge 46, 48, 49, 54 und die Ausnehmungen 47, 55 sowie die Zentriernuten 44, 45 sind in Siliziumätztechnik hergestellt, wodurch die geforderten Abmessungen so präzise eingehalten werden können, daß eine Justage der Anschlagflächen nach dem Zusammenbau des Schalters nicht notwendig ist. Der Schalter kann vielmehr aus den vorbereiteten Teilen ohne Justage zusammengesetzt werden.

Die Gleitflächen auf den Schienen 48, 49 sowie die Begrenzungsflächen der Ausnehmungen 50, 51 in der Siliziumplatte 38 können vorteilhaft nitriert sein, um sie zu härten und dadurch gegen Verschleiß widerstandsfähiger zu machen. Dadurch ist das fehlerfreie Funktionieren des Schalters über längere Zeit garantiert.

Es ist eine Feder 60 zum Andrücken der Siliziumplatte 38 an die Grundplatte 39 vorgesehen, die einen guten mechanischen Kontakt der Ausnehmungen 50, 51 zu den Schienen 48, 49 und der Anschlagflächen 58, 59 an die Flächen 56, 57 garantiert.

Dadurch wird eine genaue Einhaltung der Positionierung der beweglichen Siliziumplatte 38 in der jeweiligen Schaltstellung gewährleistet.

## Patentansprüche

1. Vorrichtung zur stirnseitigen Kopplung zweier einzelner oder gruppenweise zusammengefaßter Lichtwellenleiter mit einer ersten und einer zweiten Siliziumplatte, die an ihren Oberseiten Zentriernuten für die Lichtwellenleiter aufweisen und die mittels Vorsprüngen und/oder Ausnehmungen zueinander ausrichtbar sind,
**dadurch gekennzeichnet,** daß Begrenzungsflächen (23, 24, 25; 58, 59) der Vorsprünge und/oder Ausnehmungen (4; 55) der zweiten Siliziumplatte Anschlagflächen für wenigstens ein mit der ersten Siliziumplatte fest verbundenes Teil (3, 39) zur Begrenzung einer zu den Längsachsen der Lichtwellenleiter (5) transversalen Schaltbewegung einer der Siliziumplatten (1, 2; 37, 38) bilden.

2. Vorrichtung nach Anspruch 1, **dadurch gekennzeichnet,** daß die Vorsprünge und/oder Ausnehmungen (3, 4; 55) durch Ätzen der Siliziumplatten (1, 2; 37, 38) geschaffen sind.

3. Vorrichtung nach Anspruch 1 oder 2,
**dadurch gekennzeichnet,** daß die Anschlagflächen (23, 24, 25) durch Begrenzungsflächen (6, 7) einer durchgehenden Ausnehmung (4) der zweiten Siliziumplatte (2) gebildet sind und daß an jeder der Begrenzungsflächen (6, 7) wenigstens zwei Anschlagflächen (23, 24, 25) unterschiedlicher Neigung vorgesehen sind, von denen eine erste Anschlagfläche einen Winkel, der kleiner ist als 90°, mit der Oberseite der zweiten Siliziumplatte (2) einschließt und eine zweite Anschlagfläche (23, 25) mit einer der 0berseite gegenüberliegenden Unterseite der zweiten Siliziumplatte (2) ebenfalls einen Winkel, der kleiner ist als 90°, einschließt, und daß jeder der Anschlagflächen (23, 24, 25) der zweiten Siliziumplatte (2) eine Fläche (26, 27, 28) der ersten Siliziumplatte (1) zugeordnet ist, die die gleiche Neigung aufweist, wie die jeweilige Anschlagfläche (23, 24, 25).

4. Vorrichtung nach Anspruch 1 oder einem der folgenden, **dadurch gekennzeichnet,** daß jeweils zwischen zwei Anschlagflächen (23, 24) gleicher Neigung eine Anschlagfläche (24) anderer Neigung angeordnet ist.

5. Vorrichtung nach Anspruch 1 oder einem der folgenden, **dadurch gekennzeichnet,** daß die erste und die zweite Siliziumplatte (1, 2; 37, 38) über eine Parallelführung (31, 32; 48, 49) miteinander verbunden sind.

6. Vorrichtung nach Anspruch 4, **dadurch gekennzeichnet,** daß die Parallelführung (31, 32) durch eine Blechfeder gebildet ist.

7. Vorrichtung nach Anspruch 4, **dadurch gekennzeichnet,** daß die erste und die zweite Siliziumplatte (1, 2) in jeweils einer Aufnahme (33, 34) fixiert sind und daß die Aufnahmen (33, 34) über zwei zueinander parallel verlaufende Filmgelenke (35, 36) miteinander verbunden sind.

8. Verfahren zur Herstellung einer Vorrichtung nach Anspruch 1 und einem der folgenden, **dadurch gekennzeichnet,** daß die beiden Siliziumplatten (1, 2; 37, 38) aus Teilen einer einzigen Ausgangsplatte (8) hergestellt werden und daß die Nuten und Anschlagflächen (23, 24, 25; 58, 59) in die Ausgangsplatte (8) durch Ätzen mit Hilfe einer Maske eingebracht werden.

9. Verfahren nach Anspruch 8, **dadurch gekennzeichnet,** daß die beiden Siliziumplatten (1, 2) nach dem Einätzen der Nuten und Anschlagflächen (23, 24, 25; 58, 59) voneinander getrennt werden.

## Claims

1. Device for the end coupling of two optical waveguides which are individual or combined into a group, having a first and a second silicon plate which at their upper sides have centring grooves for the optical waveguides and which can be aligned with respect to each other by means of projections and/or recesses, characterized in that areas of contact (23, 24, 25; 58, 59) of the projections and/or recesses (4; 55) of the second silicon plate form stop faces for at least one part (3, 39), firmly connected to the first silicon plate, to limit a switching movement of one of the silicon plates (1, 2; 37, 38), which movement is transverse to the longitudinal axes of the optical waveguides (5).

2. Device according to claim 1, characterized in that the projections and/or recesses (3, 4; 55) are created by etching the silicon plates (1, 2; 37, 38).

3. Device according to claim 1 or 2, characterized in that the stop faces (23, 24, 25) are formed by areas of contact (6, 7) of a continuous recess (4) of the second silicon plate (2) and in that at each of the areas of contact (6, 7) at least two stop faces (23, 24, 25) of differing inclination are provided, of which a first stop face forms with the upper side of the second silicon plate (2) an angle which is less than 90° and a second stop face (23, 25) likewise forms with an underside of the second silicon plate (2) lying opposite the upper side an angle which is less than 90°, and in that there is associated with each of the stop faces (23, 24, 25) of the second silicon plate (2) a surface (26, 27, 28) of the first silicon plate (1), which has the same inclination as the respective stop face (23, 24, 25).

4. Device according to claim 1 or one of the following claims, characterized in that in each case between two stop faces (23, 24) of the same inclination a stop face (24) of different inclination is arranged.

5. Device according to claim 1 or one of the following claims, characterized in that the first and the second silicon plate (1, 2; 37, 38) are connected to each other by way of a parallel construction (31, 32; 48, 49).

6. Device according to claim 4, characterized in that the parallel construction (31, 32) is formed by a plate spring.

7. Device according to claim 4, characterized in that the first and the second silicon plate (1, 2) are fixed in a respective retainer (33, 34) and in that the retainers (33, 34) are connected to each other by way of two film joints (35, 36) extending parallel to each other.

8. Method for manufacturing a device according to claim 1 and one of the following claims, characterized in that the two silicon plates (1, 2; 37, 38) are manufactured from parts of a single starting plate (8) and in that the grooves and stop faces (23, 24, 25; 58, 59) are introduced into the starting plate (8) by etching with the aid of a mask.

9. Method according to claim 8, characterized in that the two silicon plates (1, 2) are separated from each other after the etching-in of the grooves and stop faces (23, 24, 25; 58, 59).

## Revendications

1. Dispositif de couplage frontal de deux guides d'ondes lumineuses individuels ou réunis en groupe, comportant des première et seconde plaques de silicium, qui ont, sur leurs faces supérieures, des rainures de centrage pour les guides d'ondes lumineuses et qui peuvent être alignées l'une sur l'autre au moyen de parties saillantes et/ou d'évidements, caractérisé par le fait que des surfaces limites (23, 24, 25; 58, 59) des parties saillantes et/ou des évidements (4;55) de la seconde plaque de silicium forment des surfaces de butée pour au moins une partie (3,39), qui est reliée de façon fixe à la première plaque de silicium et qui sert à limiter un déplacement de commutation, transversal aux axes longitudinaux des guides d'ondes lumineuses (5), de l'une des plaques de silicium (1,2;37,38).

2. Dispositif suivant la revendication 1, caractérisé par le fait que les parties saillantes et/ou les évidements (3,4;55) sont formés par attaque chimique des plaques de silicium (1,2;37,38).

3. Dispositif suivant la revendication 1 ou 2, caractérisé par le fait que les surfaces de butée (23,24,25) sont formées par des surfaces limites (6,7) d'un évidement continu (4) de la seconde plaque de silicium (2) et que sur chacune des surfaces limites (6,7) sont prévues au moins deux surfaces de butée (23,24,25) ayant des inclinaisons différentes et dont la première fait un angle, qui est inférieur à 90°, avec la face supérieure de la seconde plaque de silicium, et une seconde surface de butée (23,24) fait également un angle, qui est inférieur à 90°, avec une face inférieure, située à l'opposé de la face supérieure, de la seconde plaque de silicium (2), et qu'à chacune des surfaces de butée (23,24,25) de la seconde plaque de silicium (2) est associée une surface (26,27,28) de la première plaque de silicium (1), qui possède la même inclinaison que la surface de butée respective (23,24,25).

4. Dispositif suivant la revendication 1 ou l'une des suivantes, caractérisé par le fait qu'entre deux surfaces de butée (23,24) de même inclinaison est disposée respectivement une surface de butée (24) d'une autre inclinaison.

5. Dispositif suivant la revendication 1 ou l'une des suivantes, caractérisé par le fait que les première et seconde plaques de silicium (1,2;37,38) sont reliées entre elles par l'intermédiaire d'un guide parallèle (31,32,49).

6. Dispositif suivant la revendication 4, caractérisé par le fait que le guide parallèle (31,32) est formé par un ressort en tôle.

7. Dispositif suivant la revendication 4, caractérisé par le fait que les première et seconde plaques de silicium (1,2) sont immobilisées dans des logements respectifs (33,34) et que les logements (33,34) sont reliés entre eux par l'intermédiaire de deux articulations en forme de film (35,36) qui sont parallèles.

8. Procédé de fabrication d'un dispositif suivant la revendication 1 et l'une des suivantes, caractérisé par le fait qu'on fabrique les deux plaques de silicium (1,2;37,38) à partir de parties d'une seule plaque de départ (8) et qu'on ménage par attaque chimique, à l'aide d'un masque, les rainures à la surface de butée (23,24,25; 58,59) dans la plaque de départ (8).

9. Procédé suivant la revendication 8, caractérisé par le fait qu'on sépare les deux plaques de silicium (1,2) après avoir ménagé par attaque chimique les rainures et les surfaces de butée (23,24,25;58,59).
